# EUROPÄISCHE PATENTSCHRIFT

(11) **EP 1 039 125 B1**
(45) Veröffentlichungstag und Bekanntmachung des Hinweises auf die Patenterteilung: **22.12.2004**
(21) Anmeldenummer: 00102298.7
(22) Anmeldetag: 17.02.2000
(51) Int. Cl.: F02N 11/08

(54) **Verfahren zum Starten eines Verbrennungsmotors eines mit einer Abschalteinrichtung ausgestatteten Kraftfahrzeuges und Vorrichtung hierzu**
Method for starting of an internal combustion engine of a vehicle comprising a stopping device and the device
Méthode pour démarrer un moteur à combustion interne d'un véhicule équipé d'un dispositif d'arrêt et son dispositif

(30) Priorität: 20.03.1999 DE 19912725
(43) Veröffentlichungstag der Anmeldung: 27.09.2000
(73) Patentinhaber: Volkswagen Aktiengesellschaft, 38436 Wolfsburg (DE)
(72) Erfinder: Miersch, Rainer, Dipl.-Ing., 38471 Rühen (DE); Haack, Reinhold, Dipl.-Ing., 38304 Wolfenbüttel (DE)
(74) Vertreter: Effert, Bressel und Kollegen

(56) Entgegenhaltungen:
- DE-A- 19 621 950
- US-A- 4 405 031
- PATENT ABSTRACTS OF JAPAN vol. 007, no. 230 (M-249), 12. Oktober 1983 (1983-10-12) & JP 58 124066 A (HITACHI KENKI KK), 23. Juli 1983 (1983-07-23)
- PATENT ABSTRACTS OF JAPAN vol. 1996, no. 02, 29. Februar 1996 (1996-02-29) & JP 07 266932 A (SUZUKI MOTOR CORP), 17. Oktober 1995 (1995-10-17)

## Beschreibung

Die vorliegende Erfindung betrifft ein Verfahren zum Starten eines Verbrennungsmotors eines mit einer Abschalteinrichtung ausgestatteten Kraftfahrzeugs gemäß dem Oberbegriff des Anspruchs 1. Die Erfindung betrifft auch eine Vorrichtung zur Durchführung des Verfahrens nach Anspruch 7.

Aufgrund knapper werdender Ressourcen und der Verteuerung von Kraftstoffen für Verbrennungsmotoren sind bereits Maßnahmen bekannt geworden, den Kraftstoffverbrauch der mit Verbrennungsmotoren ausgestatteten Kraftfahrzeuge zu verringern. Ein möglicher Ansatzpunkt hierzu besteht darin, den Verbrennungsmotor nur dann laufen zu lassen und mit dem Abtrieb zu verbinden, wenn seine Leistung auch benötigt wird, d.h. der Motor ein Moment zur Beschleunigung oder Konstantfahrt des Kraftfahrzeuges abgibt oder ein Schubmoment im Motorbremsbetrieb erzeugt.

Wenn das mit einem Verbrennungsmotor ausgestattete Kraftfahrzeug beispielsweise einen Berg hinab rollt und hierzu weder Motorbremsbetrieb (Schubbetrieb) noch Zugbetrieb erforderlich ist, ist es im Hinblick auf den Kraftstoffverbrauch günstig, den Motor abzustellen und vom Triebstrang abzutrennen. Es sind auch bereits Kraftfahrzeuge mit sogenannten Start-Stop-Systemen bekannt geworden, deren Verbrennungsmotor beispielsweise beim Warten an einer Lichtzeichenanlage abgestellt und dann über eine Betätigung des Gaspedals wieder gestartet werden kann.

Die Verbrennungsmotoren solcher bekannter Kraftfahrzeuge werden üblicherweise elektromotorisch gestartet, wobei die hierzu zum Einsatz kommenden Elektromotoren eine Zeitdauer von etwa 1 Sekunde benötigen, bis der Motor seine Anlaßdrehzahl erreicht hat und nach dem Starten selbständig läuft. Zum Erreichen dieser kurzen Startzeit und zum Überwinden der hohen inneren Schleppmomente besitzen diese Elektromotoren vergleichsweise hohe Leistungen und benötigen daher hohe Einschaltströme, die von der Bordelektrik des Kraftfahrzeuges zur Verfügung gestellt werden muß. Diese hohen Ströme erfordern entsprechend leistungsstark ausgelegte Stromquellen in der Form von den im Kraftfahrzeug eingebauten Batterien, die von der Bordelektrik aufgeladen werden müssen.

Eine bekannte Stop-Start-Einrichtung für eine Brennkraftmaschine eines Kraftfahrzeugs ist in der DE 196 21 950 A1 beschrieben worden. Diese bekannte Einrichtung ist insbesondere für ein Kraftfahrzeug mit einem automatischen Getriebe oder einem Getriebe mit automatischer Kupplung vorgesehen, und läßt den Motor nur bei einem nicht betätigten Gaspedal und/oder bei einer betätigten Betriebsbremse starten.

Eine Stop-Start-Einrichtung gemäß Oberbegriff von Anspruch 1 ist aus der US-A-4 405 031 bekannt.

Der vorliegenden Erfindung liegt dahingegen die Aufgabe zugrunde, ein Verfahren zum Starten eines Verbrennungsmotors eines mit einer Abschalteinrichtung ausgestatteten Kraftfahrzeuges mittels einer Startvorrichtung mit niedrigem Leistungsniveau zu schaffen und eine Vorrichtung zur Durchführung dieses Verfahrens vorzusehen.

Die Erfindung weist zur Lösung dieser Aufgabe hinsichtlich des Verfahrens die im Anspruch 1 angegebenen Merkmale auf. Vorteilhafte Verfahrensausgestaltungen sind in den weiteren Ansprüchen beschrieben. Darüber hinaus weist die Erfindung zur Lösung der Aufgabe hinsichtlich der Vorrichtung die im Anspruch 7 angegebenen Merkmale auf. Ausgestaltungen hiervon sind in den weiteren Ansprüchen beschrieben.

Nach der Erfindung ist daher ein Verfahren zum Starten eines Verbrennungsmotors eines mit einer Abschalteinrichtung ausgestatteten Kraftfahrzeuges mittels einer Startvorrichtung mit niedrigem Leistungsniveau vorgesehen, wobei nach dem Verfahren festgestellt wird, daß nach einer Abschaltung des Verbrennungsmotors eine Momentenabgabe des Motors erforderlich werden wird, wobei diese Feststellung beispielsweise durch den Fahrer erfolgen kann, und nach einem weiteren Schritt der Startvorgang mittels Betätigung der Startvorrichtung zum Erreichen der Anlaßdrehzahl des Verbrennungsmotors eingeleitet wird und der Startvorgang solange aufrecht erhalten wird, bis der Verbrennungsmotor gestartet ist und nach dem Start des Verbrennungsmotors der Fahrmodus (z.B. Freilauf, d.h. Abkopplung des Motors vom Triebstrang) des Kraftfahrzeugs vor dem Startvorgang solange aufrecht erhalten wird, bis die Momentenabgabe durch den Motor erforderlich wird, also beispielsweise der Fahrer das Gaspedal betätigt.

Eine Startvorrichtung mit niedrigem Leistungsniveau ist dabei entweder ein niedrig dimensionierter konventioneller Anlassermotor oder ein Anlaßsystem, bei dem die zum Anlassen erforderliche mechanische Energie von z.B. einem Elektromotor niedriger Leistung über einen z.B. mehrere Sekunden dauernden Vorgang in einen Zwischenspeicher (z.B. Schwungradspeicher, Federspeicher, Hydraulikdruckspeicher) eingebracht wird.

Unter dem Begriff der Abschalteinrichtung kann eine solche Einrichtung verstanden werden, die den Motor immer dann abschaltet, wenn eine Momentenabgabe, also ein Zug- oder ein Schubmoment nicht erforderlich ist, also beispielsweise bei einer Bergabfahrt des Kraftfahrzeugs, bei der eine Motorbremswirkung nicht benötigt wird, oder beispielsweise auch bei einem Stillstand des Kraftfahrzeugs im Stau, vor einer Ampel oder dergleichen. Wenn der Fahrer des Kraftfahrzeugs, welches mit einer Startvorrichtung, also beispielsweise einem Elektromotor mit niedrigem Leistungsniveau ausgestattet ist, feststellt, daß eine Abgabe des Motormoments durch den Motor in Kürze erforderlich werden wird, also beispielsweise bei einer Bergabfahrt mit Stillstand des Motors, bei der ein vorausfahrendes langsames Fahrzeug überholt werden muß, dann leitet er den Startvorgang des Motors durch die Startvorrichtung mit niedrigem Leistungsniveau zu einem Zeitpunkt ein, zu dem das Motormoment noch nicht erforderlich ist, da die Starrtvorrichtung in der Form beispielsweise eines Elektromotors mit niedriger Leistung eine längere Zeit benötigt als bekannte Elektromotoren, bis der Verbrennungsmotor seine Anlaßdrehzahl erreicht hat.

Dieser Startvorgang wird solange aufrecht erhalten, bis festgestellt wird, daß der Verbrennungsmotor gestartet ist, wobei diese Feststellung beispielsweise über eine elektronische Steuereinrichtung durchgeführt werden kann, die die Motordrehzahl überwacht. Der vom Fahrer eingeleitete Startvorgang wird daher durch die elektronische Steuereinrichtung über beispielsweise ein Signal "Startvorgang fortsetzen" solange durchgeführt, bis diese erkennt, daß der Motor gestartet worden ist. Der Fahrmodus des Kraftfahrzeugs vor dem Startvorgang wird nach dem Verfahren solange aufrecht erhalten, bis die Momentenabgabe durch den Motor dann auch tatsächlich erforderlich ist.

Die Aufrechterhaltung dieses Fahrmodus des Kraftfahrzeugs vor dem Starten des Motors wird nach der Erfindung über die Zeitdauer der Betätigung und/oder die Anzahl der Betätigungen der Starteinrichtung oder mehrerer Starteinrichtungen gesteuert. Es bedeutet dies mit anderen Worten, daß, wenn nur eine Starteinrichtung vorgesehen ist, durch beispielsweise eine kurze Betätigung der Starteinrichtung festgestellt wird, daß der Fahrmodus des Kraftfahrzeugs vor dem Startvorgang auch nach dem Starten des Motors noch beibehalten werden soll, weil ein möglicherweise ängstlicher oder vorausschauender Fahrer des Kraftfahrzeugs den Motor schon einige Zeit vor dem eigentlichen Zeitpunkt der erforderlichen Momentenabgabe starten möchte. Über eine längere Zeitdauer der Betätigung der Starteinrichtung kann festgestellt werden, daß der Motor unmittelbar nach dem Starten sofort in den Schubmomentenbetrieb (Motorbremsbetrieb) oder Zugmomentenbetrieb übergehen muß. Zu dieser Feststellung kann neben der Zeitdauer der Betätigung der Starteinrichtung auch die Anzahl der Betätigungen der Starteinrichtung ausgewertet werden, also beispielsweise bei einer zweimaligen schnell aufeinanderfolgenden Betätigung der Starteinrichtung die Entscheidung getroffen werden, daß der Fahrmodus des Kraftfahrzeugs vor dem Startvorgang nach dem Startvorgang nicht mehr länger aufrecht erhalten werden soll, also beispielsweise sofort ein Schubmoment des Motors zur Verfügung stehen muß. Wenn zwei oder mehrere Starteinrichtungen vorgesehen sind, so ist eine Feststellung über die Dauer des Aufrechterhaltens des Fahrmodus des Kraftfahrzeugs vor dem Startvorgang durch die Auswertung der Zahl der betätigten Starteinrichtungen möglich, es ist also beispielsweise durch die gleichzeitige Betätigung zweier Starteinrichtungen eine Entscheidung möglich, daß der Motor sofort nach dem Starten in Schub- oder Zugbetrieb übergehen soll.

Erfindungsgemäß ist es vorgesehen, daß die Starteinrichtung ein Taster ist, der vom Fahrer betätigt werden kann, um in vorausschauender Weise einen Startvorgang des Motors über die Startvorrichtung mit niedriger Leistung einzuleiten und zwar derart, daß dann, wenn der Motor tatsächlich zur Momentenabgabe benötigt wird, dieser seinen Startvorgang dann auch tatsächlich bereits abgeschlossen hat. Die Startvorrichtung mit niedriger Leistung benötigt verglichen mit bekannten Startvorrichtungen erheblich geringere Ströme insbesondere beim Einschalten und damit ein auf deutlich weniger Leistungsverbrauch ausgestattetes elektrisches Bordnetzsystem des Kraftfahrzeuges. Da hierdurch auch eine Auslegung des Bordnetzes des Kraftfahrzeugs für geringere Ströme ausreicht, ist es auch möglich, die Stromquelle beispielsweise in der Form der Batterie des Kraftfahrzeugs für niedrigere Ströme auszulegen. Insgesamt kann der Startvorgang mit günstigerem Wirkungsgrad durchgeführt und die Starteinrichtung leichter ausgelegt werden, wodurch sich Kraftstoffeinsparungen ergeben.

Nach einer Weiterbildung des Verfahrens nach der Erfindung ist vorgesehen, daß die Starteinrichtung ein Fahrpedal und/oder Bremspedal des Kraftfahrzeuges ist, an dem beispielsweise Taster als Sensoren zur Erkennung des Motorstartwunsches des Fahrers angebracht werden können. Wenn der Verbrennungsmotor des Kraftfahrzeugs im Stillstand durch die Abschalteinrichtung abgeschaltet wird, dann kann die Startvorbereitung des Verbrennungsmotors durch den Fahrer über eine Betätigung des Fahr- oder Gaspedales oder beispielsweise über eine Betätigung des Gaspedals und gleichzeitige Betätigung des Bremspedals eingeleitet werden.

Auch ist es möglich, daß als Starteinrichtung ein Gangwahlschalter oder Fahrstufenschalter des Kraftfahrzeugs verwendet wird, also beispielsweise ein Startvorgang des Motors durch den Fahrer herbeigeführt wird, indem dieser bei einem Handschaltgetriebe den Gangwahlschalter betätigt oder bei einem automatischen Getriebe den Fahrstufenschalter kurzzeitig in Richtung des beispielsweise ersten Ganges betätigt, wobei sich dieser bereits im Eingriff befinden kann oder sich auch noch in seiner Außereingriffsstellung befinden kann. Diese Betätigung des Gangwahl- oder Fahrstufenschalters durch den Fahrer führt dann nach der Erfindung zu einem Einleiten des Startvorgangs des Verbrennungsmotors durch die Startvorrichtung mit niedriger Leistung und einem Aufrechterhalten dieses Startvorgangs, bis der Motor gestartet worden ist. Über die vorstehend bereits angesprochene Erkennung der Zeitdauer der Betätigung des Schalters durch den Fahrer oder der Zahl der Betätigungen kann festgestellt werden, ob der Motor nach dem Startvorgang sofort in den Zug- oder Schubbetrieb übergehen soll oder nicht. Zu diesem Zweck ist nach der Erfindung eine Auswerteeinrichtung zur Erfassung der Zeitdauer der Betätigung und/oder der Anzahl der Betätigungen der Starteinrichtungen vorgesehen derart, daß die Auswerteeinrichtung die Zeitdauer des Aufrechterhaltens des Fahrmodus des Kraftfahrzeugs vor dem Startvorgang in Abhängigkeit von der Erfassung steuert. Die vorstehend bereits angesprochene Startvorrichtung kann nach der Erfindung ein mit dem Verbrennungsmotor in lösbaren Eingriff bringbarer Elektromotor mit niedriger Leistung mit oder ohne Energiespeicher sein, der bis zum Erreichen der Anlaßdrehzahl des Verbrennungsmotors bis zu mehrere Sekunden lang betätigt wird, also beispielsweise etwa 1 bis 5 Sekunden lang benötigt, bis der Verbrennungsmotor seine Anlaßdrehzahl erreicht hat.

Durch das vorausschauende Verhalten des Fahrers kann der Verbrennungsmotor also frühzeitig gestartet worden sein. Wegen der sich schnell ändernden Verkehrssituationen ist es aber denkbar, daß das Erfordernis, in Kürze Motormoment zu benötigen, wieder wegfällt. Damit der Verbrennungsmotor jetzt nicht unnötig weiter läuft, ist vorgesehen, daß eine erneute oder anders spezifizierte Betätigung der Starteinrichtung ein Signal an die Abschalteinrichtung bewirkt, die zu einer Abschaltung des Verbrennungsmotors führt.

In einer besonders günstigen Auslegung könnte die Starteinrichtung aber auch folgendermaßen ausgelegt werden: Das Gaspedal ist mit einem zusätzlichen sogenannten Untergasweg ausgestattet, bei dem schon bei geringer Betätigungskraft am Gaspedal ein Kontakt betätigt wird, ohne daß jedoch diese kleine Betätigung zu einer Veränderung am Gemischbildner führt. Solange dieser Kontakt betätigt ist, wertet die Steuerung dies als Wunsch des Fahrers aus, daß der Verbrennungsmotor laufen soll, bei Entlastung des Kontaktes wird der Motor abgeschaltet.

Nach der Erfindung ist es daher möglich, daß bei einem Kraftfahrzeug mit einer Abschalteinrichtung der Verbrennungsmotor über eine Startvorrichtung mit niedriger Leistung gestartet wird, ohne daß dadurch ansonsten funktionale Änderungen eintreten, also beispielsweise nach dem Start des Verbrennungsmotors kein sofortiger Motorbremsbetrieb ausgelöst wird. Hierdurch kann ein ängstlicher Fahrer eines mit einem solchen Verbrennungsmotor und einer solchen Startvorrichtung ausgestatteten Kraftfahrzeugs den Motor nach dem Abschalten durch die Abschalteinrichtung jederzeit wieder starten. Mit dem erfindungsgemäßen Verfahren können Kraftfahrzeuge mit sehr niedrigem Kraftstoffverbrauch betrieben werden, bei denen Startvorrichtungen mit niedriger Leistung und entsprechend längeren Startvorgängen eingesetzt werden. Einem vorausschauenden Fahrer ist es nach dem Verfahren möglich, bei einem sich im Stillstand befindenden Verbrennungsmotor den Startvorgang so rechtzeitig in die Wege zu leiten, daß der Verbrennungsmotor zum Zeitpunkt des wahren Lastbedarfs schon läuft. Hierdurch wird es möglich, zum Starten des Verbrennungsmotors Elektromotoren mit niedrigen Strömen einzusetzen, die ein entsprechend leistungsreduziertes elektrisches Bordnetz des Kraftfahrzeuges ermöglichen.

Hinsichtlich vorstehend im einzelnen nicht näher erläuterter Merkmale der Erfindung wird im übrigen ausdrücklich auf die Ansprüche verwiesen.

## Patentansprüche

1. Verfahren zum Starten eines Verbrennungsmotors eines mit einer Abschalteinrichtung ausgestatteten Kraftfahrzeuges mittels einer Startvorrichtung mit niedrigem Leistungsniveau **gekennzeichnet**, umfassend folgende Schritte:
- Feststellen, dass nach einer Abschaltung des Verbrennungsmotors eine Momentenabgabe des Motors erforderlich wird;
- Einleiten eines Startvorganges mittels Betätigung der Startvorrichtung zum Erreichen der Anlassdrehzahl des Verbrennungsmotors durch mindestens eine vom Fahrer zu betätigende Starteinrichtung;
- Aufrechterhalten des Startvorganges bis der Verbrennungsmotor gestartet ist;
- Aufrechterhalten des Fahrmodus des Kraftfahrzeuges von vor dem Startvorgang bis die Momentenabgabe erforderlich ist,
**dadurch gekennzeichnet, dass**
über die Zeitdauer der Betätigung und/oder die Anzahl der Betätigungen der Starteinrichtung oder Starteinrichtungen die Dauer des Aufrechterhaltens des Fahrmodus des Kraftfahrzeuges von vor dem Startvorgang gesteuert wird, wobei über eine Form der Betätigung einstellbar ist, dass der Motor nach dem Starten sofort in den Schubmomentenbetrieb oder Zugmomentenbetrieb übergehen muss.

2. Verfahren nach Anspruch 1, **dadurch gekennzeichnet, dass** die Starteinrichtung ein Taster ist, der vom Fahrer betätigt wird.

3. Verfahren nach Anspruch 2 , **dadurch gekennzeichnet, dass** die Starteinrichtung ein Fahrpedal und/oder Bremspedal des Kraftfahrzeuges ist.

4. Verfahren nach einem der Ansprüche 2 oder 3, **dadurch gekennzeichnet, dass** die Starteinrichtung ein Gangwahlschalter oder Fahrstufenschalter des Kraftfahrzeuges ist.

5. Verfahren nach einem der vorstehenden Ansprüche, **dadurch gekennzeichnet, dass** im Fahrzeug vorhandene Sensoren zur Ermittlung einer vorbestimmten Betätigungsweise als Betätigung der Starteinrichtung ausgewertet werden.

6. Verfahren nach einem der vorstehenden Ansprüche, **dadurch gekennzeichnet, dass** die Starteinrichtung in Abhängigkeit von ihrer Betätigung zum Abschalten des Verbrennungsmotors verwendet wird.

7. Vorrichtung zur Durchführung des Verfahrens nach einem der vorstehenden Ansprüche, **gekennzeichnet durch** eine Auswerteeinrichtung zur Erfassung der Zeitdauer der Betätigung und/oder der Anzahl der Betätigungen der Starteinrichtung derart, dass die Auswerteeinrichtung die Zeitdauer des Aufrechterhaltens des Fahrmodus der Kraftfahrzeuges von vor dem Startvorgang in Abhängigkeit von der Erfassung steuert, wobei über eine Form der Betätigung einstellbar ist, dass der Motor nach dem Starten sofort in den Schubmomentenbetrieb oder Zugmomentenbetrieb übergehen muss.

8. Vorrichtung zur Durchführung des Verfahrens nach Anspruch 7, **dadurch gekennzeichnet, dass** die Startvorrichtung ein mit dem Verbrennungsmotor in lösbaren Eingriff bringbarer Elektromotor mit niedriger Leistung ist, der bis zum Erreichen der Anlassdrehzahl des Verbrennungsmotors bis zu mehrere Sekunden lang betätigt wird.

9. Vorrichtung zur Durchführung des Verfahrens nach einem der Ansprüche 7 oder 8, **dadurch gekennzeichnet, dass** die Startvorrichtung ein mit dem Verbrennungsmotor in lösbaren Eingriff bringbarer Elektromotor mit niedriger Leistung in Verbindung mit einem Speicher für mechanische Energie ist, und bei dem der Verbrennungsmotor aus der Energie des Speichers heraus gestartet wird und bei dem bis zum Erreichen des erforderlichen Energieniveaus im Speicher und anschließendem Erreichen der Anlassdrehzahl des Verbrennungsmotors bis zu mehrere Sekunden vergehen.

## Claims

1. Method for starting an internal combustion engine of a motor vehicle which is equipped with a switching-off device, by means of a starter device having a low power level, comprising the following steps:
- detecting that it is necessary for the engine to output torque after the internal combustion engine has been switched off;
- initiation of a starting process by activating the starting device in order to reach the starting speed of the internal combustion engine by means of at least one starter device which can be activated by the driver;
- maintaining the starting process until the internal combustion engine has started;
- maintaining the driving mode with a motor vehicle from before the starting process until it is necessary to output torque,
**characterized in that**
the period for which the driving mode of the motor vehicle is maintained from before the starting process is controlled by means of the period for which the starter device or devices is/are activated and/or the number of activations of said device or devices, wherein it is possible to set a form of activation such that the engine has to change into the thrust torque mode or traction torque mode immediately after starting.

2. Method according to Claim 1, **characterized in that** the starting device is a push button key which is activated by the driver.

3. Method according to Claim 2, **characterized in that** the starter device is an accelerator pedal and/or brake pedal of the motor vehicle.

4. Method according to one of Claims 2 or 3, **characterized in that** the starter device is a gear selector switch or driving position switch of the motor vehicle.

5. Method according to one of the preceding claims, **characterized in that** sensors which are present in the vehicle are evaluated in order to determine a predetermined method of activation as a means of activating the starter device.

6. Method according to one of the preceding claims, **characterized in that** the starter device is used to switch off the internal combustion engine, as a function of the activation of said starter device.

7. Device for carrying out the method according to one of the preceding claims, **characterized by** an evaluation device for sensing the period for which the starter device is activated and/or the number of activations of said device in such a way that the evaluation device controls the period for which the driving mode of the motor vehicle is maintained from before the starting process as a function of the sensing, wherein it is possible to set, by means of one form of activation, that the engine has to change immediately into the thrust torque mode or traction torque mode immediately after starting.

8. Device for carrying out the method according to Claim 7, **characterized in that** the starter device is a low-power electric motor which can be moved into releasable engagement with the internal combustion engine and which is activated for up several seconds until the starting speed of the internal combustion engine is reached.

9. Device for carrying out the method according to one of Claims 7 or 8, **characterized in that** the starter device is a low-power electric motor which can be moved into releasable engagement with the internal combustion engine, in conjunction with an accumulator for mechanical energy, and in which the internal combustion engine is started from the energy in the accumulator, and in which up to several seconds pass until the necessary energy level in the accumulator is reached and the starting speed of the internal combustion engine is subsequently reached.

## Revendications

1. Procédé pour démarrer un moteur à combustion interne d'un véhicule équipé d'un dispositif d'arrêt au moyen d'un démarreur **caractérisé par** un faible niveau de puissance, comprenant les étapes suivantes :
- établissement qu'après un arrêt du moteur à combustion interne, un apport de couple du moteur est nécessaire ;
- lancement d'une opération de démarrage au moyen de l'actionnement du démarreur pour obtenir le régime de démarrage du moteur à combustion interne par au moins un dispositif de démarrage à actionner par le conducteur ;
- maintien de l'opération de démarrage jusqu'au démarrage du moteur à combustion interne ;
- maintien du mode de conduite du véhicule automobile depuis avant l'opération de démarrage jusqu'à ce que l'apport du couple soit nécessaire,
**caractérisé en ce que**
la durée du maintien du mode de conduite du véhicule automobile est commandée depuis avant l'opération de démarrage par le biais de la durée de l'actionnement et/ou du nombre des actionnements du dispositif de démarrage ou des dispositifs de démarrage, une forme de l'actionnement permettant de déterminer si le moteur doit passer immédiatement après le démarrage en mode à couple de poussée ou en mode à couple de traction.

2. Procédé selon la revendication 1, **caractérisé en ce que** le dispositif de démarrage est un palpeur qui est actionné par le conducteur.

3. Procédé selon la revendication 2, **caractérisé en ce que** le dispositif de démarrage est une pédale d'accélérateur et/ou une pédale de frein du véhicule automobile.

4. Procédé selon l'une quelconque des revendications 2 ou 3, **caractérisé en ce que** le dispositif de démarrage est un commutateur de sélection du rapport vitesse ou un commutateur de gamme de conduite du véhicule automobile.

5. Procédé selon l'une quelconque des revendications précédentes, **caractérisé en ce que** des capteurs présents dans le véhicule sont analysés en vue de la détection d'un mode d'actionnement prédéterminé en tant qu'actionnement du dispositif de démarrage.

6. Procédé selon l'une quelconque des revendications précédentes, **caractérisé en ce que** le dispositif de démarrage est utilisé en fonction de son actionnement pour l'arrêt du moteur à combustion interne.

7. Dispositif pour la mise en oeuvre du procédé selon l'une quelconque des revendications précédentes, **caractérisé par** un dispositif d'analyse pour détecter la durée de l'actionnement et/ou le nombre des actionnements du dispositif de démarrage de telle sorte que le dispositif d'analyse commande la durée du maintien du mode de conduite du véhicule automobile depuis avant l'opération de démarrage en fonction de la détection, une forme de l'actionnement permettant de déterminer si le moteur doit passer immédiatement après le démarrage en mode à couple de poussée ou en mode à couple de traction.

8. Dispositif pour la mise en oeuvre du procédé selon la revendication 7, **caractérisé en ce que** le démarreur est un moteur électrique de faible puissance pouvant être amené en prise amovible avec le moteur à combustion interne, lequel est actionné jusqu'à l'obtention du régime de démarrage du moteur à combustion interne pendant jusqu'à plusieurs secondes.

9. Dispositif pour la mise en oeuvre du procédé selon l'une quelconque des revendications 7 à 8, **caractérisé en ce que** le démarreur est un moteur électrique de faible puissance pouvant être amené en prise amovible avec le moteur à combustion interne, en liaison avec un accumulateur d'énergie mécanique, et dans lequel le moteur à combustion interne est démarré à partir de l'énergie de l'accumulateur et dans lequel jusqu'à plusieurs secondes s'écoulent jusqu'à l'obtention du niveau d'énergie requis dans l'accumulateur et l'obtention subséquente du régime de démarrage du moteur à combustion interne.
